# EUROPÄISCHE PATENTSCHRIFT

(11) **EP 2 428 261 B1**
(45) Veröffentlichungstag und Bekanntmachung des Hinweises auf die Patenterteilung: **06.01.2016**
(21) Anmeldenummer: 11178214.0
(22) Anmeldetag: 22.08.2011
(51) Int. Cl.: B01D 29/96, B01D 35/16

(54) **FILTERANORDNUNG FÜR HYDRAULIKMEDIEN, INSBESONDERE ÖL**
FILTER ASSEMBLY FOR HYDRAULIC MEDIA, IN PARTICULAR OIL
AGENCEMENT DE FILTRE POUR MILIEUX HYDRAULIQUES, NOTAMMENT D'HUILE

(30) Priorität: 08.09.2010 DE 102010040404
(43) Veröffentlichungstag der Anmeldung: 14.03.2012
(73) Patentinhaber: MAHLE International GmbH, 70376 Stuttgart (DE)
(72) Erfinder: Dunsch, Robert, 71665 Vaihingen (DE); Keller, Thomas, 73547 Lorch-Weitmars (DE); Schützle, Roland, 70469 Stuttgart (DE); Widmaier, Andreas, 71083 Herrenberg (DE)
(74) Vertreter: BRP Renaud & Partner mbB Rechtsanwälte Patentanwälte Steuerberater

(56) Entgegenhaltungen:
- EP-A2- 2 228 520
- JP-A- H09 173 716
- JP-A- 2004 195 437
- US-A1- 2010 147 754
- US-B2- 7 585 408

## Beschreibung

Die Erfindung bezieht sich auf eine Filteranordnung für Hydraulikmedien, insbesondere Öl, mit Filtergehäuse sowie darin angeordnetem Filterkörper und gehäuseseitiger Ablassöffnung mit Schraubverschlussteil.

Derartige Filteranordnungen sind allgemein bekannt. Beim Wechsel des Filterkörpers muss jeweils ein im Filtergehäuse verbleibender Ölrest abgelassen werden. Um dies zu ermöglichen, ist am Filtergehäuse eine Ablassöffnung vorgesehen, die üblicherweise mit einem Schraubelement verschlossen wird. Damit dieses beim normalen Filterbetrieb in seiner Schließlage verbleibt, muss es in der Regel mit hinreichendem Drehmoment in seine Schließlage gedreht werden. Dies ist ein vergleichsweise aufwändiger Prozess. Im Übrigen besteht die Gefahr, dass das Schraubverschlussteil mit überhöhtem Drehmoment festgedreht wird, mit der Folge, dass das Verschlussteil und/oder das Filtergehäuse beschädigt werden können.

Deshalb ist es Aufgabe der Erfindung, einen "narrensicheren" Verschluss für die Ablassöffnung des Filtergehäuses zu schaffen.

Diese Aufgabe wird erfindungsgemäß dadurch gelöst, dass das Schraubverschlussteil vor Erreichen seiner Schraubendlage im bzw. am zugeordneten gehäuseseitigen Gewinde eine absperrwirksame Position erreicht, und dass ein am Schraubverschlussteil angeordnetes Rastelement im Zusammenwirken mit einer gehäuseseitigen Gegenrast einen fühl- und/oder hörbaren Rasthub ausführt, wenn das Schraubverschlussteil eine absperrwirksame Solllage erreicht.

Dabei ist vorzugsweise des Weiteren vorgesehen, dass das Schraubverschlussteil in und nahe der Solllage durch Selbsthemmung festgehalten wird. Die Erfindung beruht auf dem allgemeinen Gedanken, Ablassöffnung und Schraubverschlussteil derart auszubilden, dass eine hinreichende Absperrung bereits erreicht wird, bevor das Schraubverschlussteil seine Schraubendlage erreicht. Erfindungsgemäß kann eine solche Lage durch Selbsthemmung auf Dauer festgehalten werden. Durch die fühl- bzw. hörbare Verrastung kann dann sichergestellt werden, dass eine durch Selbsthemmung hinreichend gesicherte Lage tatsächlich erreicht worden ist. Erfindungsgemäß dient die Verrastung also vor allem nur zur Anzeige einer langfristig sicheren Absperrlage. Dagegen hat die Verrastbarkeit nur eine untergeordnete Bedeutung im Zusammenhang mit der Sicherung der Absperrlage.

Gemäß einer konstruktiv bevorzugten Ausführungsform der Erfindung kann das Verschlussteil einen gegen Reibungswiderstand in eine gehäuseseitige Ablassbohrung einschiebbaren Verschlusskörper sowie einen mit einem gehäuseseitigen Gewindeabschnitt zusammenwirkenden Gewindekörper aufweisen. Hier übernimmt der Verschlusskörper im Zusammenwirken mit der gehäuseseitigen Ablassbohrung die Fixierung der Verschlusslage durch Selbsthemmung.

Außerdem kann in bevorzugter Ausgestaltung der Erfindung vorgesehen sein, am vom Innenraum des Filtergehäuses ferneren Ende des Verschlusskörpers am Verschlussteil Öffnungen anzuordnen, die mit einem Schlauchanschluss des Schraubverschlussteiles kommunizieren. Auf diese Weise lässt sich das abzulassende Öl sicher in einen Auffangbehälter einführen.

Im Übrigen wird hinsichtlich bevorzugter Merkmale der Erfindung auf die Ansprüche und die nachfolgende Erläuterung der Zeichnung verwiesen, anhand der eine besonders bevorzugte Ausführungsform der Erfindung näher beschrieben wird.

In der Zeichnung zeigt:
- Fig. 1: einen Axialschnitt einer erfindungsgemäßen Filteranordnung, wobei lediglich ein unterer Gehäuseteil mit der Ablassöffnung und dem zugeordneten Schraubverschlussteil und einem Filterkörper dargestellt ist, und
- Fig. 2: eine perspektivische Darstellung des Schraubverschlussteiles.

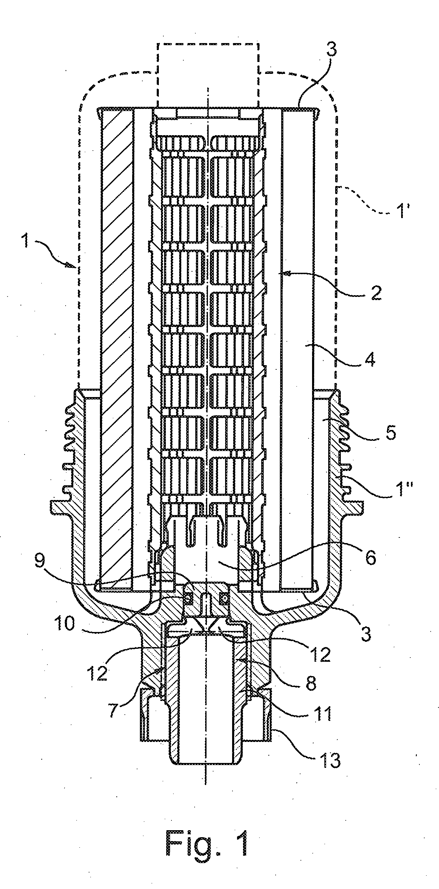

Gemäß Fig. 1 besitzt die erfindungsgemäße Filteranordnung ein Gehäuse 1, welches beispielsweise aus einem nicht näher dargestellten Oberteil 1' und einem Unterteil 1" besteht. Innerhalb des Gehäuses 1 ist ein Filterkörper 2 angeordnet, welcher ein zwischen zwei Endscheiben 3 angeordnetes Filtermedium 4 aufweist. Das Filtermedium 4 ist in der Regel in Draufsicht auf die Endscheiben 3 sternförmig ausgebildet, um eine möglichst große filterwirksame Fläche bereitzustellen.

Mit den Endscheiben 3 schließt der Filterkörper 2 dicht an Rohrstutzen an, die im Ober- und Unterteil des Gehäuses 1 angeordnet sind. Damit teilt das Filtermedium 4 innerhalb des Gehäuses einen Rohraum 5 sowie einen Reinraum 6 voneinander ab. Dem Rohraum 5 wird über einen beispielsweise im Gehäuseoberteil 1' angeordneten Einlass (nicht dargestellt) verschmutztes Öl zugeführt, dessen Verschmutzungen beim Durchtritt des Öls durch das Filtermedium 4 zurückgehalten werden, so dass aus dem Reinraum 6 über einen im dargestellten Beispiel ebenfalls im Gehäuseoberteil 1' angeordneten Auslass gereinigtes Öl abgeführt werden kann.

Grundsätzlich ist auch eine umgekehrte Strömungsrichtung des zu reinigenden Öls möglich, derart, dass der Rohraum innerhalb des Filterkörpers 2 und der Reinraum außerhalb des Filterkörpers 2 angeordnet sind.

Bei einem Wechsel des Filterkörpers 2 muss ein im Gehäuse 1 verbleibender Ölrest abgelassen werden. Dazu ist eine Ölablassanordnung 7 vorgesehen. Diese umfasst ein Schraubverschlussteil 8, welches einen Verschlusskörper 9 aufweist, der sich in einen entsprechend angepassten Abschnitt der gehäuseseitigen Ablassöffnung einschieben lässt. Dabei wird der Radialspalt zwischen dem Außenumfang des Verschlusskörpers 9 und dem Innenumfang des zugeordneten Abschnittes der Ablassöffnung durch einen Dichtring 10 abgesperrt, der als 0-Ring ausgebildet und in einer Umfangsnut des Verschlusskörpers 9 angeordnet ist. An den Verschlusskörper 9 schließt sich nach unten ein Außengewindeteil 11 an, welches sich in einen Innengewindeabschnitt am Gehäuseunterteil 1" eindrehen lässt. Dieses Außengewindeteil 11 ist im Wesentlichen rohrförmig ausgebildet und lässt sich an seinem unteren Ende mit einem nicht dargestellten Schlauch verbinden. Das Außengewindeteil 11 besitzt einen im Vergleich zum Verschlusskörper 9 größeren Außendurchmesser, derart, dass im Übergangsbereich zwischen Verschlusskörper 9 und Außengewindeteil 11 eine Ringstufe gebildet wird. Diese Ringstufe wird von Öffnungen 12 durchsetzt, die mit dem rohrförmigen Innenraum des Außengewindeteiles 11 und damit mit dem gegebenenfalls am Außengewindeteil 11 angeschlossenen Schlauch kommunizieren. Wenn der Verschlusskörper 9 durch entsprechende Schraubverstellung des Außengewindeteiles 11 aus dem zugeordneten Abschnitt der gehäuseseitigen Ablassöffnung herausgezogen wird, wird der Innenraum des Gehäuses 1 über die Öffnungen 12 mit dem rohrförmigen Innenraum des Verschlusskörpers 9 und damit mit dem Schlauch verbunden, so dass der im Gehäuse 1 vorhandene Ölrest ablaufen kann.

Am Schraubverschlussteil 8 ist zu seiner Betätigung eine handradartige Handhabe 13 angeordnet, die mit Rasthaken 14 versehen ist, welche mit gehäuseseitigen Gegenrastelementen zusammenwirken und einen fühl- bzw. hörbaren Rasthub ausführen, wenn das Schraubverschlussteil 8 mit seinem Verschlusskörper 9 eine die gehäuseseitige Ablassöffnung absperrende Einschublage erreicht. Dabei dient der Rasthub der Rasthaken 14 im Wesentlichen nur als Signal dafür, dass die Ablassöffnung verschlossen ist. Dagegen ist die Rastwirkung von untergeordneter Bedeutung, denn die vom Dichtring 10 bewirkte Reibung innerhalb der Ablassöffnung führt dazu, dass das Schraubverschlussteil 8 in seiner jeweiligen Drehlage durch Selbsthemmung fixiert wird. Da eine Absperrung der Ablassöffnung bereits gegeben ist, bevor das Außengewindeteil 11 des Verschlusskörpers 9 innerhalb des gehäuseseitigen Gewindeabschnittes eine Endlage erreicht hat, braucht das Schraubverschlussteil nicht "festgedreht" zu werden. Dementsprechend kann das Schraubverschlussteil 8 später beim Öffnen der Ablassöffnung mit geringer Handkraft betätigt werden.

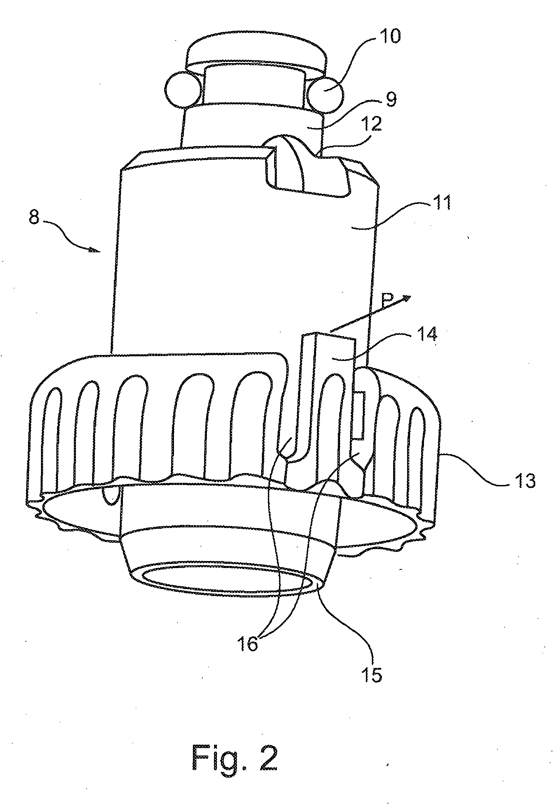

In Fig. 2 ist das Schraubverschlussteil 8 vergrößert perspektivisch dargestellt. Der Verschlusskörper 9 mit dem geschnitten dargestellten Dichtring 10 geht unter Bildung einer Ringstufe in das Außengewindeteil 11 über dessen in der Zeichnung unteres Ende als Schlauchanschluss 15 ausgebildet ist. An der Stufe zwischen Verschlusskörper 9 und Außengewindeteil 11 sind die Öffnungen 12 angeordnet, die mit dem rohrförmigen Innenraum des Außengewindeteiles 11 kommunizieren. Die Handhabe 13 besitzt eine geriffelte Umfangsfläche, die einstückig mit den Rasthaken 14 verbunden ist, wobei zwischen den Flanken der Rasthaken 14 und der benachbarten Umfangsfläche der Handhabe 13 jeweils Schlitze 16 ausgebildet sind, derart, dass die Rasthaken 14 nur über schmale Stege mit der Umfangsfläche der Handhabe 13 verbunden sind. Diese Stege werden elastisch tordiert, wenn die Rasthaken 14 in Pfeilrichtung P ausführen.

## Patentansprüche

1. Filteranordnung für Hydraulikmedien, insbesondere Öl, mit Filtergehäuse (1) sowie darin angeordnetem Filterkörper (2) und gehäuseseitiger Ablassöffnung mit Schraubverschlussteil (8),
**dadurch gekennzeichnet,**
**dass** das Schraubverschlussteil (8) vor Erreichen seiner Schraubendlage im bzw. am zugeordneten gehäuseseitigen Gewinde eine absperrwirksame Lage erreicht, und dass ein am Schraubverschlussteil (8) angeordnetes Rastelement (14) im Zusammenwirken mit einer gehäuseseitigen Gegenrast einen fühl- und/oder hörbaren Rasthub ausführt, wenn das Schraubverschlussteil (8) eine absperrwirksame Solllage erreicht.

2. Filteranordnung nach Anspruch 1,
**dadurch gekennzeichnet,**
**dass** das Schraubverschlussteil (8) im Bereich der Solllage durch Selbsthemmung festgehalten wird.

3. Filteranordnung nach Anspruch 2,
**dadurch gekennzeichnet,**
**dass** das Verschlussteil (8) einen gegen Reibungswiderstand in eine gehäuseseitige Ablassbohrung einschiebbaren Verschlusskörper (9) sowie einen mit einem gehäuseseitigen Gewindeabschnitt zusammenwirkenden Gewindekörper (11) aufweist.

4. Filteranordnung nach einem der Ansprüche 1 bis 3,
**dadurch gekennzeichnet,**
**dass** am vom Innenraum des Filtergehäuses (1) ferneren Ende des Verschlusskörpers (9) am Verschlussteil (8) Öffnungen (12) angeordnet sind, die mit einem Schlauchanschluss des Verschlussteiles (8) kommunizieren.

5. Filteranordnung nach einem der Ansprüche 1 bis 4,
**dadurch gekennzeichnet,**
**dass** am Schraubverschlussteil (8) eine handradartige Handhabe (13) mit beim Rasthub aus deren Umfangsfläche austretenden Rastelementen (14) angeordnet ist.

## Claims

1. Filter layout for hydraulic media, particularly oil, with a filter housing (1) as well as a filter body (2) laid out within and a drain outlet with a screw-cap part (8),
**characterised by** the fact
that the screw-cap part (8), before reaching its screw end position in and on the assigned thread on the housing, reaches a locking position and that a latching element (14) arranged on the screw cap part (8) connects to the latch located on the housing with a snap that is either audible or can be felt when the screw cap part (8) reaches a target locking position.

2. Filter layout according to claim 1,
**characterised by** the fact
that the screw cap part (8) is held into place within the target position area by means of a self locking effect.

3. Filter layout according to claim 2
**characterised by** the fact
that the screw-cap part (8) has a sealing body (9) that can be inserted into an outlet hole located on the housing against friction resistance as well as a threaded body (11) that functions together with a threaded section on the housing.

4. Filter layout according to one of the claims 1 to 3
**characterised by** the fact
that openings (12) have been arranged on the far end of the locking body (9) on the screw-cap part (8) from the interior of the filter housing (1) that interact with the hose connection of the screw-cap part (8).

5. Filter layout according to one of the claims 1 to 4
**characterised by** the fact
that a handwheel-like handle (13) is arranged on the screw-cap part (8) with latching elements (14) that protrude from the circumferential surface when being snapped into place.

## Revendications

1. Agencement de filtre pour fluides hydrauliques, notamment pour de l'huile, avec un habillage de filtre (1) ainsi qu'avec un corps de filtre (2) agencé à l'intérieur et avec un orifice de sortie côté habillage avec pièce de fermeture à vis (8),
**caractérisé en ce que**, avant d'atteindre sa position finale vissée dans ou sur le filetage associé côté habillage, la pièce de fermeture à vis (8) atteint une position efficace pour l'obturation et **en ce qu'**un élément d'enclenchement (14) agencé sur la pièce de fermeture à vis (8) réalise, en coopérant avec un élément d'enclenchement complémentaire côté habillage, un mouvement d'enclenchement sensible et/ou audible lorsque la pièce de fermeture à vis (8) atteint une position de consigne efficace pour l'obturation.

2. Agencement de filtre selon la revendication 1, **caractérisé en ce que** la pièce de fermeture à vis (8) est maintenue dans la zone de la position de consigne par autoserrage.

3. Agencement de filtre selon la revendication 2, **caractérisé en ce que** la pièce de fermeture (8) comporte un corps de fermeture (9) pouvant être inséré contre une résistance de frottement dans un trou de sortie côté habillage ainsi qu'un corps fileté (11) coopérant avec un tronçon fileté côté habillage.

4. Agencement de filtre selon l'une des revendications 1 à 3, **caractérisé en ce que** des orifices (12) qui communiquent avec un raccord de tuyau de la pièce de fermeture (8) sont agencés sur la pièce de fermeture (8) au niveau de l'extrémité du corps de fermeture (9) la plus éloignée de l'espace intérieur de l'habillage de filtre (1).

5. Agencement de filtre selon l'une des revendications 1 à 4, **caractérisé en ce qu'**une manette (13) du type volant à main avec des éléments d'enclenchement (14) qui sortent de sa surface circonférentielle lors du mouvement d'enclenchement est agencée sur la pièce de fermeture à vis (8).
